# EUROPEAN PATENT APPLICATION

(11) **EP 4 209 254 A1**
(43) Date of publication of application: **12.07.2023**
(21) Application number: 21864328.6
(22) Date of filing: 31.08.2021
(51) Int. Cl.: A63F 13/21, A63F 13/28, F24F 7/003

(54) **ENTERTAINMENT METHOD AND ENTERTAINMENT DEVICE**

(30) Priority: 02.09.2020 JP 2020147653
(71) Applicant: Sharp Kabushiki Kaisha, Sakai-shi Osaka 590-8522 (JP)
(72) Inventor: MATSUMOTO, Masaru, Sakai City Osaka 5908522 (JP); FUNAMORI, Hirokazu, Sakai City Osaka 5908522 (JP)
(74) Representative: Treeby, Philip David William
(86) International application number: PCT/JP2021/031927
(87) International publication number: WO 2022/050270

(57) **Abstract**

An entertainment method includes outputting and delivering. In the outputting, an image related to entertainment and/or a sound related to entertainment is output. In the delivering, ions are delivered in such a manner that an ion concentration in a space (R) in which a user (H) is present increases, based on the image and/or the sound. The method preferably further includes detecting a change in a state of the user (H). In the delivering, ions are preferably delivered based on the change in the state of the user (H), the image, and/or the sound.

## Description

### Technical Field

The present invention relates to an entertainment method and an entertainment device.

### Background Art

A game system described in PTL 1 includes a gaming device and a controller. The gaming device executes a computer game based on a game program. The controller provides input to the gaming device. The controller is operated by a user.

### Citation List

### Patent Literature

PTL 1: JP 2019-80990 A

### Summary of Invention

### Technical Problem

However, with the game system described in PTL 1, an effect from ions cannot be given to a person.

The present invention is made in view of the problem described above, and an object thereof is to provide an entertainment method and an entertainment device that can give an effect from ions to a person.

### Solution to Problem

According to one aspect of the present invention, an entertainment method includes outputting and delivering. In the outputting, an image related to entertainment and/or a sound related to entertainment is output. In the delivering, ions are delivered in such a manner that an ion concentration in a space in which a person is present increases, based on the image and/or the sound.

According to another aspect of the present invention, an entertainment method includes outputting and delivering ions. In the outputting, an image related to entertainment and/or a sound related to entertainment is output. In the delivering, delivering toward a person is performed based on the image and/or the sound.

According to yet another aspect of the present invention, an entertainment method includes outputting, detecting, and delivering. In the outputting, an image related to entertainment and/or a sound related to entertainment is output. In the detecting, a change in a state of the person is detected. In the delivering, ions are delivered in such a manner that an ion concentration in a space in which the person is present increases, based on a detection result indicating the change in the state of the person.

According to yet another aspect of the present invention, an entertainment method includes outputting, detecting, and delivering. In the outputting, an image related to entertainment and/or a sound related to entertainment is output. In the detecting, a change in a state of the person is detected. In the delivering, ions are delivered toward the person based on a detection result indicating the change in the state of the person.

According to yet another aspect of the present invention, an entertainment device includes an output device, an ion delivery device, and a delivery control unit. The output device is configured to output an image related to entertainment and/or a sound related to entertainment. The ion delivery device is configured to deliver ions. The delivery control unit is configured to control the ion delivery device based on the image or the sound.

According to yet another aspect of the present invention, an entertainment device includes an output device, an ion delivery device, a detection unit, and a delivery control unit. The output device is configured to output an image related to entertainment and/or a sound related to entertainment. The ion delivery device is configured to deliver ions. The detection unit is configured to detect a change in a state of the person. The delivery control unit is configured to control the ion delivery device based on the change in the state of the person.

### Advantageous Effects of Invention

According to the entertainment method and the entertainment device of the present invention, an effect from ions can be given to a person.

### Brief Description of Drawings

FIG. 1 is a diagram illustrating an entertainment device according to a first embodiment of the present invention.
FIG. 2 is a block diagram of the entertainment device according to the first embodiment.
FIG. 3 is a flowchart of processing executed by a control unit according to the first embodiment.
FIG. 4 is a flowchart of processing executed by a control unit according to a second embodiment of the present invention.
FIG. 5 is a flowchart of processing executed by a control unit according to a third embodiment of the present invention.
FIG. 6 is a flowchart of processing executed by a control unit according to a fourth embodiment of the present invention.
FIG. 7 is a diagram illustrating a laboratory in which an entertainment device according to the present invention is disposed.
FIG. 8 is a diagram showing a schedule of experiments conducted in the laboratory illustrated in FIG. 7.
FIG. 9 is a graph G1 showing an example and a comparative example of the present invention.
FIG. 10 is a graph G2 showing the example and the comparative example of the present invention.
FIG. 11 is a graph G3 showing the example and the comparative example of the present invention.

### Description of Embodiments

Embodiments of the present invention will be described hereinafter with reference to the accompanying drawings. Note that, in the drawings, the same or equivalent components are denoted by the same reference signs and description thereof will not be repeated.

### First Embodiment

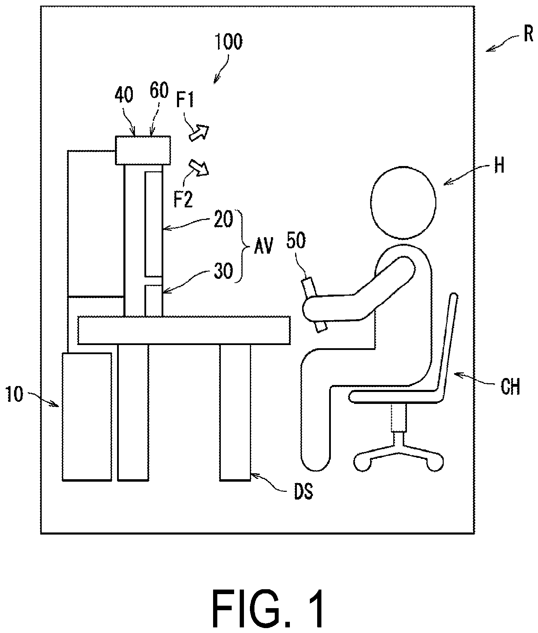

First, an entertainment device 100 according to an embodiment of the present invention will be described with reference to FIG. 1. FIG. 1 is a diagram illustrating the entertainment device 100 according to the embodiment of the present invention. The entertainment device 100 provides entertainment to a user H. The user H corresponds to an example of a "person".

The entertainment is, for example, a movie. Alternatively, the entertainment is, for example, an image. Alternatively, the entertainment is, for example, a video and music from television broadcasting. The entertainment is, for example, a video and music from cable television. Alternatively, the entertainment is, for example, a computer game. The computer game is, for example, a video game, an action game, a roll playing game, a puzzle game, a simulation game, a shooting game, a sports game, a racing game, a music game, a card game, a fighting game, a board game, or a table game. The computer game may be executed via a server or may be executed without using a server. The computer game played via a server is, what is called, an on-line game. The computer game played without using a server is, what is called, an off-line game.

As illustrated in FIG. 1, the entertainment device 100 is disposed in a room. The user H is present in a space R in the room. A desk DS and a chair CH are disposed in the space R. A part of the entertainment device 100 is disposed on the desk DS. The user H sits on the chair CH. The entertainment device 100 includes a gaming device 10, an output device AV, an ion delivery device 40, a controller 50, and a detection unit 60.

The output device AV outputs an image related to entertainment. In addition, the output device AV outputs a sound related to entertainment. For example, the output device AV outputs an image related to a movie or a sound related to a movie. Furthermore, the output device AV outputs an image related to a movie and a sound related to the movie. For example, the output device AV outputs an image related to a computer game or a sound related to a computer game. Furthermore, the output device AV outputs an image related to a computer game and a sound related to the computer game.

The output device AV includes a display unit 20 and a sound output unit 30. The display unit 20 displays an image. Specifically, the display unit 20 displays an image based on image information. The image information includes information related to display of an image. The image information is, for example, image information related to a movie. Alternatively, for example, the image information is image information related to a computer game. The display unit 20 is, for example, a liquid crystal display, an organic electro luminescence (EL) display, a micro light emitting diode (LED), or a plasma display.

The sound output unit 30 outputs a sound. The sound output unit 30 is, for example, a speaker. The sound output unit 30 is, for example, an earphone output terminal. Specifically, the sound output unit 30 outputs a sound based on sound information. The sound information includes information related to output of a sound. The sound information is, for example, sound information related to a movie. The sound information is, for example, sound information related to a computer game.

The gaming device 10 progresses a computer game. Specifically, the gaming device 10 receives an operation signal from the user H via the controller 50 and progresses the computer game. In other words, the gaming device 10 allows the user H to play the computer game. The computer game is, for example, a game allowing match-ups. The match-up includes, for example, a match-up between the user H and an opponent operated by a game program, a match-up between the user H and another user H using a computer game, and a match-up in an electronic sports (e-sports) competition via a server device. The gaming device 10 may reproduce a movie to allow the user H to appreciate images and sounds. The gaming device 10 is a dedicated device or a general-purpose device for progressing the computer game. The general-purpose device is, for example, a personal computer.

The ion delivery device 40 is disposed in the room and delivers ions. Specifically, the ion delivery device 40 is fixed to the output device AV. The ion delivery device 40 delivers ions.

The controller 50 receives an operation of the user H. For example, the user H operates the controller 50. Then, the controller 50 receives an operation of the user H. Furthermore, the operation received by the controller 50 is transmitted to the gaming device 10 as an operation instruction. The controller 50 is a dedicated or general-purpose operation device of the gaming device 10. The controller 50 may be, for example, a keyboard or a pointing device such as a mouse.

The detection unit 60 detects a change in a state of the user H. The detection unit 60 includes a camera and an infrared sensor. The camera images the user H and outputs an imaging signal as a detection signal to the gaming device 10. The infrared sensor detects a surface temperature of the user H. Specifically, the infrared sensor detects the surface temperature of the face of the user H. The infrared sensor includes an infrared absorbing film and a thermistor. The infrared absorbing film receives thermal radiation (infrared rays) emitted from a surface of an object. The infrared absorbing film has a thermosensitive portion that absorbs thermal radiation from an object to raise its temperature. The thermistor detects a temperature of the infrared absorbing film. A detection result of the infrared sensor is output to the gaming device 10.

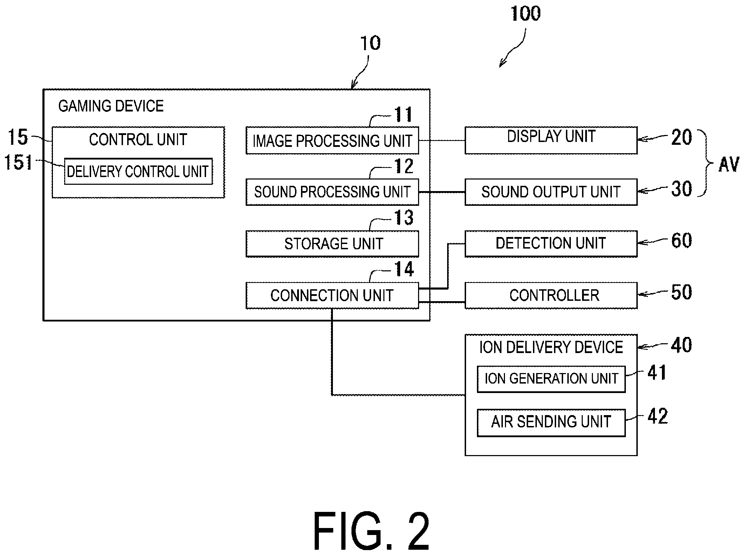

Next, with reference to FIG. 1 and FIG. 2, the entertainment device 100 of the present embodiment will be described in detail. FIG. 2 illustrates a block diagram of the entertainment device 100.

As illustrated in FIG. 2, the gaming device 10 includes an image processing unit 11, a sound processing unit 12, a storage unit 13, a connection unit 14, and a control unit 15.

The image processing unit 11 generates image information related to entertainment. The image processing unit 11 includes, for example, a graphics processing unit (GPU). Specifically, the image processing unit 11 generates two-dimensional image information related to the computer game or three-dimensional image information related to the computer game. The image processing unit 11 is connected to the display unit 20. The image information generated by the image processing unit 11 is transmitted to the display unit 20.

The sound processing unit 12 generates sound information related to entertainment. The sound processing unit 12 includes, for example, a digital signal processor (DSP). The generated sound information is subjected to digital-to-analog (D/A) conversion and is output from the sound output unit 30 as a sound of the computer game. The sound processing unit 12 is connected to the sound output unit 30. The sound information generated by the sound processing unit 12 is transmitted to the sound output unit 30.

The storage unit 13 stores data, a computer program, and a game program. For example, the storage unit 13 temporarily stores data necessary for each piece of processing of the control unit 15. For example, the storage unit 13 stores setting data for the display unit 20, setting data for the sound output unit 30, setting data for the detection unit 60, setting data for the controller 50, and setting data for the ion delivery device 40. The storage unit 13 includes a main storage device (e.g., a semiconductor memory) such as a read only memory (ROM) and a random access memory (RAM), and an auxiliary storage device (e.g., a hard disk drive). The RAM includes, for example, a video RAM (VRAM). The storage unit 13 may include a removable medium.

The connection unit 14 is an interface for connecting the ion delivery device 40, the controller 50, and the detection unit 60 to the gaming device 10. For example, a signal is transmitted from the control unit 15 to the ion delivery device 40 via the connection unit 14. In addition, for example, a signal regarding an operation is transmitted from the controller 50 to the control unit 15 via the connection unit 14. Furthermore, for example, a signal indicating a detection result is transmitted from the detection unit 60 to the control unit 15 via the connection unit 14.

The ion delivery device 40 includes an ion generation unit 41 and an air sending unit 42.

The ion generation unit 41 generates ions. The ion generation unit 41 may include a pair of discharge electrodes. Each of the pair of discharge electrodes may be a needle-shaped or brush-shaped electrode. Each of the pair of discharge electrodes may be formed of, for example, a metal having electrical conductivity. Alternatively, each of the pair of discharge electrodes may be, for example, a carbon fiber or a resin having electrical conductivity.

The pair of discharge electrodes discharge. Specifically, the pair of discharge electrodes to which a high voltage is applied discharge and generate active species. The active species contain ions. For example, the pair of discharge electrodes to which a high voltage is applied generate a corona discharge between the pair of discharge electrodes. Then, one of the pair of discharge electrodes emits positive ions via discharge. The positive ions are cluster ions (H⁺(H₂O)ₘ, where m is any integer of zero or greater) with a plurality of water molecules clustered around a hydrogen ion (H⁺). Also, the other of the pair of discharge electrodes emits negative ions via discharge. The negative ions are cluster ions (O₂⁻(H₂O)ₙ, where n is any integer of zero or greater) with a plurality of water molecules clustered around an oxygen ion (O₂⁻).

The emitted positive ions and negative ions each may take in, for example, mold and general bacteria in the air and undergo a chemical reaction on the surfaces of the mold and the general bacteria. The active species hydroxyl radical (•OH) is produced by the chemical reaction. Then, the mold and the general bacteria may be removed by action of the hydroxyl radical (•OH).

The air sending unit 42 generates wind. The air sending unit 42 is, for example, a fan. The fan is, for example, a sirocco fan, a propeller fan, a turbo fan, a mixed flow fan, a line flow fan (tradename), or a cross flow fan. For example, as illustrated in FIG. 1, the wind generated by the air sending unit 42 is directed in a first direction F1 and a second direction F2. The first direction F1 is, for example, a direction toward the space R. The second direction F2 is, for example, a direction toward the user H.

The wind generated by the air sending unit 42 contains ions generated by the ion generation unit 41. That is, the wind including ions is delivered in the first direction F 1 and the second direction F2. Then, the ions are delivered into the room and the space R is filled with the ions.

The control unit 15 includes a processor such as a central processing unit (CPU) or an application specific integrated circuit (ASIC), and a storage device. For example, the control unit 15 receives a signal output by the controller 50. The control unit 15 controls each element of the gaming device 10 based on the received signal. Specifically, as illustrated in FIG. 2, the control unit 15 controls the elements of the gaming device 10 such as the image processing unit 11, the sound processing unit 12, the storage unit 13, and the connection unit 14.

Next, with reference to FIG. 1 and FIG. 2, the gaming device 10 will be described in detail. The control unit 15 of the gaming device 10 includes a delivery control unit 151. The control unit 15 functions as the delivery control unit 151 by executing a computer program.

The delivery control unit 151 controls the ion delivery device 40.

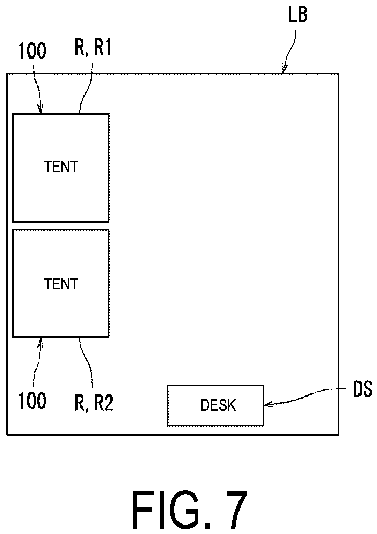

Specifically, the delivery control unit 151 controls the ion delivery device 40 in such a manner that the ion delivery device 40 delivers ions based on an image related to entertainment or a sound related to entertainment. More specifically, the delivery control unit 151 controls the ion delivery device 40 in such a manner that the ion delivery device 40 delivers ions based on the image related to entertainment and the sound related to entertainment. An ion concentration in the space R in which the user H is present increases due to the delivered ions. The user H who sees the image related to entertainment or the user H who hears the sound related to entertainment experiences a change in mood. Mood indicates a mental state of the user H. The mental state of the user H includes excitement, impatience, disappointment, elation, and the like. Thus, ions can be delivered in tune with a change in the mental state of the user H. As a result, an effect from ions can be given to the user H when their mental state changes. The effect from ions will be described below with reference to the example described in FIGS. 7 to 11.

For example, the delivery control unit 151 controls the ion delivery device 40 in such a manner that the ion delivery device 40 delivers ions, based on an image related to a movie and/or a sound related to a movie. An ion concentration in the space R in which the user H is present increases due to the delivered ions. For example, the user H who sees an image in which a car collides in a movie or the user H who hears a sound of car collision in the movie experiences a changes in mood. Thus, the delivery control unit 151 can deliver ions at a timing at which the mental state of the user H changes. As a result, an effect from ions can be given to the user H when their mental state changes.

The gaming device 10 of the entertainment device 100 of the present embodiment progresses a computer game, for example. Specifically, when the control unit 15 of the gaming device 10 receives an operation signal from the user H via the controller 50 and the control unit 15 of the gaming device 10 progresses a computer game, an image related to the computer game is displayed on the display unit 20. In addition, when the control unit 15 of the gaming device 10 receives an operation signal from the user H via the controller 50 and the control unit 15 of the gaming device 10 progresses the computer game, a sound related to the computer game is output from the sound output unit 30. That is, an image related to the computer game corresponding to the operation of the user H and a sound related to the computer game corresponding to the operation of the user H are output. In other words, ions are delivered in response to the operation of the user H. An ion concentration in the space R in which the user H is present increases due to the delivered ions. Thus, ions can be delivered in tune with a change in the mental state of the user H who plays the computer game. As a result, an effect from ions can be given to the user H when their mental state changes.

For example, the delivery control unit 151 controls the ion delivery device 40 in such a manner that the ion delivery device 40 delivers ions, based on an image related to the computer game and/or a sound related to the computer game. An ion concentration in the space R in which the user H is present increases due to the delivered ions. For example, the user H who sees an image in which a car collides in the computer game or the user H who hears a sound of car collision in the computer game experiences a change in mood. Thus, the delivery control unit 151 can deliver ions at a timing at which the mental state of the user H changes. As a result, an effect from ions can be given to the user H when their mental state changes.

For example, when an effect from ions is given to the user H, the user H can concentrate on playing a computer game. As a result, when a case where the ion delivery device 40 delivers ions and a case where the ion delivery device 40 does not deliver ions are compared, evaluation related to the operation of the computer game is improved in the case where ions are delivered. That is, there is a possibility that the evaluation related to the operation of the computer game played by the user H can be improved objectively or subjectively.

In a case where the control unit 15 of the gaming device 10 receives an operation signal from the user H via the controller 50, the control unit 15 controls the image processing unit 11 in such a manner that the image processing unit 11 generates image information corresponding to the operation signal. Next, the image information generated by the image processing unit 11 is transmitted to the display unit 20. Then, the display unit 20 displays an image indicating the image information. The image displayed on the display unit 20 is an image related to the computer game.

In a case where the control unit 15 of the gaming device 10 receives an operation signal from the user H via the controller 50, the control unit 15 controls the sound processing unit 12 in such a manner that the sound processing unit 12 generates sound information corresponding to the operation signal. Next, the sound information generated by the sound processing unit 12 is transmitted to the sound output unit 30. Then, the sound output unit 30 outputs a sound indicating the sound information. The sound output by the sound output unit 30 is a sound related to the computer game.

The gaming device 10 of the entertainment device 100 of the present embodiment outputs an image corresponding to a progress status of a computer game. In addition, the gaming device 10 of the entertainment device 100 outputs a sound corresponding to the progress status of the computer game. Then, the delivery control unit 151 controls the ion delivery device 40 in such a manner that the ion delivery device 40 changes an amount of ions delivered in accordance with the progress status of the computer game. When the computer game progresses, the mental state of the user H changes. Thus, the amount of ions delivered can be changed in tune with a change in the mental state of the user H. As a result, an effect from ions can be given to the user H when their mental state changes.

For example, in general, in an ending portion of an event included in a computer game, the mental state of the user H is likely to change. In addition, for example, in general, in a beginning portion of an event included in a computer game, the mental state of the user H is unlikely to change. Thus, the amount of ions delivered in the ending portion of the event is greater than the amount of ions delivered in the beginning portion of the event.

Note that the amount of ions delivered is changed by changing an airflow coming from the air sending unit 42. Specifically, for example, the delivery control unit 151 controls the air sending unit 42 so as to change the airflow. Then, the air sending unit 42 blows air and at the same time, the ion generation unit 41 emits ions. Thus, ions are contained in the wind generated by the air sending unit 42. That is, in response to increasing the airflow, the amount of ions delivered can also be increased. Thus, the amount of ions delivered is changed by changing the airflow coming from the air sending unit 42. In addition, for example, the delivery control unit 151 controls the ion generation unit 41 in such a manner that the number of times ions are generated changes. Specifically, the delivery control unit 151 controls the ion generation unit 41 in such a manner that the number of times discharge occurs is changed. As the number of times discharge occurs increases, the amount of ions generated increases. Then, the ion generation unit 41 generates ions, and at the same time, the air sending unit 42 blows air. Thus, ions are contained in the wind generated by the air sending unit 42. That is, in response to increasing the amount of ions generated, the amount of ions delivered can also be increased. Thus, the amount of ions delivered is changed by changing the amount of ions generated by the ion generation unit 41. Note that the delivery control unit 151 may increase the amount of ions delivered by increasing the airflow coming from the air sending unit 42 and further increasing the amount of ions generated by the ion generation unit 41.

In addition, the delivery control unit 151 can control the ion delivery device 40 in such a manner that ions are delivered based on a change in the state of the user H detected by the detection unit 60. Specifically, the delivery control unit 151 controls the ion delivery device 40 in such a manner that ions are delivered based on a change in the state of the user H, an image related to the computer game, and/or a sound related to the computer game. An ion concentration in the space R in which the user His present increases due to the delivered ions. The user H who sees the image related to the computer game or the user H who hears the sound related to the computer game has a change in the state of the user H. In a case where the state of the user H changes, the mental state of the user H changes. Thus, a timing at which ions are delivered can be accurately tuned to a timing at which the mental state of the user H changes. As a result, the effect from ions can be given to the user H at a more effective timing.

More specifically, the delivery control unit 151 delivers ions, based on a change in the state of the user H after the image related to the computer game is output and/or a change in the state of the user H after the sound related to the computer game is output. For example, the mood of the user H does not change immediately, in some cases. For example, the mood of the user H may be changed 10 seconds after seeing an image related to a movie. Thus, the detection unit 60 detects the state of the user H after the image and/or the sound is output, and the delivery control unit 151 controls the ion delivery device 40 based on the detection result. As a result, the effect from ions can be given to the user H at a more effective timing.

Further, the change in the state of the user H includes a change in the face of the user H and/or a change in the motion of the user H. In addition, the change in the state of the user H includes a facial expression of the user H and/or a surface temperature of the face of the user H. The change in the mental state of the user H sometimes appears in the face of the user H and the motion of the user H. That is, a change in the face of the user H indicates that the mental state of the user H has changed. Specifically, a change in the facial expressi on of the user H indicates that the mental state of the user H has changed. Further, a change in the surface temperature of the face of the user H indicates that the mental state of the user H has changed. Furthermore, a change in the motion of the user H indicates that the mental state of the user H has changed. Thus, among changes in the state of the user H, a motion in which the mental state of the user H is likely to appear can be detected. As a result, the effect from ions can be given to the user H at a more effective timing.

The change in the motion of the user H includes, for example, a body motion. The body motion indicates, for example, a case where a posture of the user H sitting on a chair is changed. The body motion indicates, for example, a case where a position of a hand of the user H is changed.

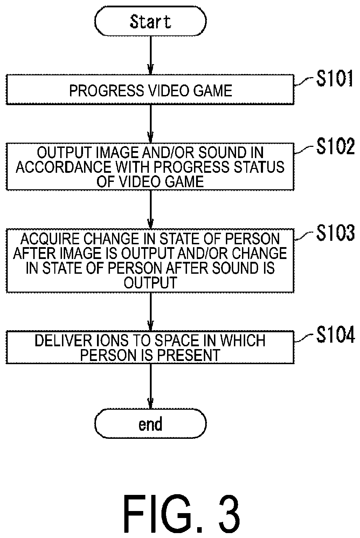

Next, with reference to FIG. 3, processing executed by the control unit 15 of the first embodiment will be described. FIG. 3 is a flowchart of the processing executed by the control unit 15 of the first embodiment. As illustrated in FIG. 3, the processing executed by the control unit 15 includes step S101 to step S104. The ion delivery device 40 may continue the delivery of ions after the gaming device 10 starts the progress of the computer game. When the ion delivery device 40 continuously performs the delivery of ions, the delivery control unit 151 controls the ion delivery device 40 in such a manner that the ion delivery device 40 delivers ions at a delivery amount larger than a delivery amount of ions being continuously delivered.

In step S101, the control unit 15 of the gaming device 10 of the entertainment device 100 acquires a game program stored in the storage unit 13 and progresses the computer game. The processing then proceeds to step S102.

In step S 102, the control unit 15 of the gaming device 10 causes the output device AV to output an image related to the computer game and/or a sound related to the computer game in accordance with the progress status of the computer game. The processing then proceeds to step S103.

In step S103, the control unit 15 of the gaming device 10 acquires, from the detection unit 60, a change in the state of the user H after the image related to the computer game is output from the output device AV and/or a change in the state of the user H after the sound related to the computer game is output from the output device AV. The processing then proceeds to step S104.

In step S104, the delivery control unit 151 of the gaming device 10 delivers ions to the space R in which the user H is present, based on the detection result of the detection unit 60, the image related to the computer game, and/or the sound related to the computer game. The processing then ends.

### Second Embodiment

Next, with reference to FIGS. 1, 2, and 4, a second embodiment of processing of the control unit 15 will be described. The second embodiment is mainly different from the embodiment in that the ion delivery device 40 delivers ions to the user H. Differences between the second embodiment and the present embodiment will be described below.

The delivery control unit 151 according to the second embodiment controls the ion delivery device 40 in such a manner that ions are delivered toward the user H based on an image related to entertainment and/or a sound related to entertainment. Thus, the ion delivery device 40 delivers ions in tune with a change in the mental state of the user H, and the user H inhales the ions delivered from the ion delivery device 40. As a result, the effect from ions can be caused to act more directly when the mental state is changed. The effect from ions will be described below with reference to the example described in FIGS. 7 to 11.

In the entertainment device 100 according to the second embodiment, when the control unit 15 of the gaming device 10 receives an operation signal from the user H via the controller 50 and the control unit 15 of the gaming device 10 progresses the computer game, an image related to the computer game is displayed on the display unit 20. In addition, when the control unit 15 of the gaming device 10 receives an operation signal from the user H via the controller 50 and the control unit 15 of the gaming device 10 progresses the computer game, a sound related to the computer game is output from the sound output unit 30.

That is, an image related to the computer game corresponding to the operation of the user H and/or a sound related to the computer game corresponding to the operation of the user H is output. In other words, ions are delivered toward the user H in response to the operation of the user H. Thus, in tune with a change in the mental state of the user H who plays the computer game, ions are delivered toward the user H, and the user H inhales the ions delivered from the ion delivery device 40. As a result, the effect from ions can be caused to act more directly when the mental state is changed.

The gaming device 10 of the entertainment device 100 outputs an image corresponding to the progress status of the computer game. The gaming device 10 of the entertainment device 100 outputs a sound corresponding to the progress status of the computer game. Then, the delivery control unit 151 controls the ion delivery device 40 in such a manner that the ion delivery device 40 changes an amount of ions delivered in accordance with the progress status of the computer game. When the computer game progresses, the mental state of the user H changes. Thus, the amount of ions delivered toward the user H can be changed in tune with the change in the mental state of the user H. As a result, the effect from ions can be given even more directly to the user H when their mental state changes.

The delivery control unit 151 controls the ion delivery device 40 in such a manner that ions are delivered toward the user H based on the change in the state of the user H detected by the detection unit 60, the image related to the computer game, and/or the sound related to the computer game. Thus, a timing at which ions are delivered toward the user H can be accurately in tune with a timing at which the mental state of the user H changes. As a result, the effect from ions can be given to the user H at a more effective timing.

Specifically, the delivery control unit 151 delivers ions toward the user H based on a change in the state of the user H after the image related to the computer game is output and/or a change in the state of the user H after the sound related to the computer game is output. As a result, the effect from ions can be given to the user H at a more effective timing.

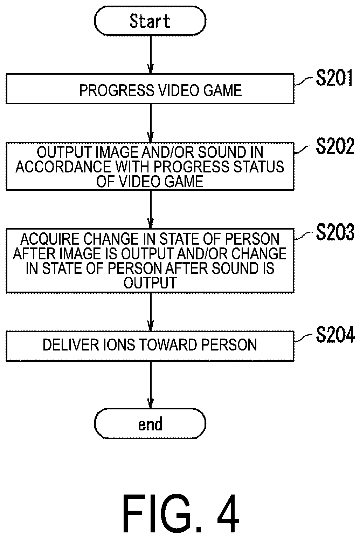

Next, with reference to FIG. 4, processing executed by the control unit 15 according to the second embodiment will be described. FIG. 4 is a flowchart of the processing executed by the control unit 15 according to the second embodiment. As illustrated in FIG. 4, the processing executed by the control unit 15 includes step S201 to step S204. Step S201 to step S203 in FIG. 4 correspond to step S101 to step S103 in FIG. 3. Thus, step S204 will be described.

In step S204, the delivery control unit 151 of the gaming device 10 delivers ions toward the user H based on the detection result of the detection unit 60, the image related to the computer game, and/or the sound related to the computer game. The processing then ends.

### Third Embodiment

Next, a third embodiment of processing of the control unit 150 will be described with reference to FIGS. 1, 2, and 5. The third embodiment is mainly different from the first embodiment in that the ion delivery device 40 delivers ions based on the state of the user H. Differences between the third embodiment and the present embodiment will be described below.

The delivery control unit 151 of the third embodiment controls the ion delivery device 40 in such a manner that ions are delivered to the space R in which the user H is present based on a change in the state of the user H. An ion concentration in the space R in which the user H is present increases due to the delivered ions. The user H who sees an image related to entertainment or the user H who hears a sound related to entertainment experiences a change in their mental state. Thus, ions can be delivered to the space R in which the user H is present in tune with the change in the mental state of the user H. As a result, an effect from ions can be given to the user H when their mental state changes.

In the entertainment device 100 according to the third embodiment, when the control unit 15 of the gaming device 10 receives an operation signal from the user H via the controller 50 and the control unit 15 of the gaming device 10 progresses the computer game, an image related to the computer game is displayed on the display unit 20. In addition, when the control unit 15 of the gaming device 10 receives an operation signal from the user H via the controller 50 and the control unit 15 of the gaming device 10 progresses the computer game, a sound related to the computer game is output from the sound output unit 30.

That is, an image related to the computer game corresponding to the operation of the user H and/or a sound related to the computer game corresponding to the operation of the user H is output. In other words, ions are delivered toward the user H in response to the operation of the user H. Thus, in tune with a change in the mental state of the user H who plays the computer game, ions are delivered to the space R in which the user H is present, and the user H inhales the ions in the space R. As a result, the effect from ions can be caused to act indirect when the mental state changes.

Further, the change in the state of the user H includes a change in the face of the user H and/or a change in the motion of the user H. In addition, the change in the state of the user H includes a facial expression of the user H and/or a surface temperature of the face of the user H. The change in the mental state of the user H sometimes appear in the face of the user H and/or the motion of the user H. Thus, among changes in the state of the user H, a motion in which the mental state of the user H is likely to appear can be detected. As a result, the effect from ions can be given to the user H at a more effective timing.

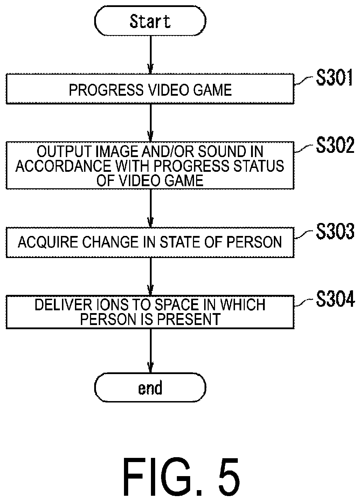

Next, with reference to FIG. 5, the processing executed by the control unit 15 according to the third embodiment will be described. FIG. 5 is a flowchart of the processing executed by the control unit 15 according to the third embodiment. As illustrated in FIG. 5, the processing executed by the control unit 15 includes step S301 to step S304. Step S301 to step S303 in FIG. 5 correspond to step S101 to step S103 in FIG. 3. Thus, step S304 will be described.

In step S304, the delivery control unit 151 of the gaming device 10 delivers ions toward the user H based on the detection result of the detection unit 60. The processing then ends.

### Fourth Embodiment

Next, the third embodiment of the processing of the control unit 150 will be described with reference to FIGS. 1, 2, and 6. A fourth embodiment is mainly different from the first embodiment in that the ion delivery device 40 delivers ions based on the state of the user H. Differences between the fourth embodiment and the present embodiment will be described below.

The delivery control unit 151 of the fourth embodiment controls the ion delivery device 40 in such a manner that ions are delivered toward the user H based on a change in the state of the user H. The user H who sees an image related to entertainment and/or the user H who hears a sound related to entertainment experiences a change in their mental state. Thus, ions can be delivered toward the user H in tune with a change in the mental state of the user H. As a result, an effect from ions can be given to the user H when their mental state changes.

In the entertainment device 100 according to the third embodiment, when the control unit 15 of the gaming device 10 receives an operation signal from the user H via the controller 50 and the control unit 15 of the gaming device 10 progresses the computer game, an image related to the computer game is displayed on the display unit 20. In addition, when the control unit 15 of the gaming device 10 receives an operation signal from the user H via the controller 50 and the control unit 15 of the gaming device 10 progresses the computer game, a sound related to the computer game is output from the sound output unit 30.

That is, an image related to the computer game corresponding to the operation of the user H and/or a sound related to the computer game corresponding to the operation of the user H is output. In other words, ions are delivered toward the user H in response to the operation of the user H. Thus, in tune with a change in the mental state of the user H who plays the computer game, ions are delivered toward the user H, and the user H inhales the ions in the space R. As a result, the effect from ions can be caused to act indirect when the mental state changes.

Further, the change in the state of the user H includes a change in the face of the user H and/or a change in the motion of the user H. In addition, the change in the state of the user H includes a facial expression of the user H and/or a surface temperature of the face of the user H. The change in the mental state of the user H sometimes appears in the face of the user H and the motion of the user H. Thus, among changes in the state of the user H, a motion in which the mental state of the user H is likely to appear can be detected. As a result, the effect from ions can be given to the user H at a more effective timing.

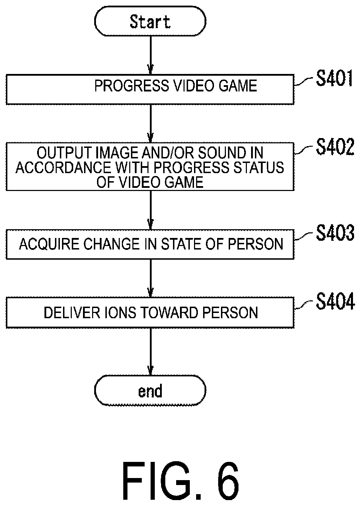

Next, with reference to FIG. 6, the processing executed by the control unit 15 according to the fourth embodiment will be described. FIG. 6 is a flowchart of the processing executed by the control unit 15 according to the fourth embodiment. As illustrated in FIG. 6, the processing executed by the control unit 15 includes step S401 to step S404. Step S401 to step S403 in FIG. 6 correspond to step S101 to step S103 in FIG. 1. Thus, step S404 will be described.

In step S404, the delivery control unit 151 of the gaming device 10 delivers ions toward the user H based on the detection result of the detection unit 60. The processing then ends.

### Example

Next, with reference to FIGS. 1, 2, and 7 to 11, an example using the entertainment device 100 according to the present invention will be described together with a comparative example. Although the present invention will be described in detail based on the example, the present invention is not limited to the example as below.

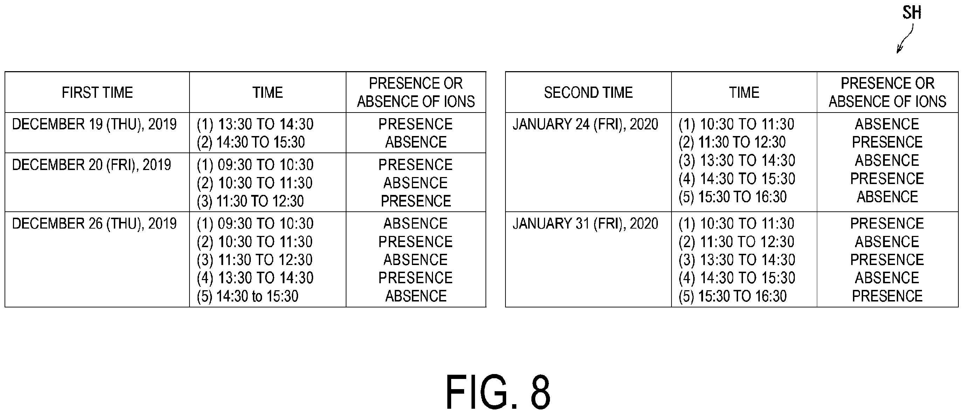

First, with reference to FIG. 7 and FIG. 8, an experimental procedure using the entertainment device 100 according to the present invention will be described. FIG. 7 is a diagram illustrating a laboratory LB in which the entertainment device 100 according to the present invention is disposed. In the laboratory LB, tents and a desk DS were disposed. The entertainment device 100 was also disposed on the desk DS outside the tents. Note that in the entertainment device 100 disposed on the desk DS outside the tents, ions are not delivered from the ion delivery device 40, or the entertainment device 100 disposed on the desk DS outside the tents does not include the ion delivery device 40.

In the laboratory LB, two tents were disposed. In the space R inside each of the tents, the entertainment device 100 illustrated in FIG. 1 was disposed. That is, the entertainment device 100 is disposed in a space R1 inside a first tent. The entertainment device 100 is disposed in a space R2 inside a second tent. At the desk DS, a subject answered a questionnaire.

FIG. 8 is a diagram showing a schedule of experiments conducted in the laboratory LB illustrated in FIG. 7. An experiment schedule SH includes a first experiment schedule and a second experiment schedule.

As shown in FIG. 8, the first experiment schedule includes 10 experiment schedulings. In the first experiment, ten subjects played a computer game.

For example, a first subject played the computer game from 13:30 to 14:30 on December 19 (Thursday), 2019. A second subject played the computer game from 14:30 to 15:30 on December 19 (Thursday), 2019. A third subject played the computer game from 9:30 to 10:30 on December 20 (Friday), 2019. A fourth subject played the computer game from 10:30 to 11:30 on December 20 (Friday), 2019. A fifth subject played the computer game from 11:30 to 12:30 on December 20 (Friday), 2019. A sixth subject played the computer game from 09:30 to 10:30 on December 26 (Thursday), 2019. A seventh subject played the computer game from 10:30 to 11:30 on December 26 (Thursday), 2019. An eighth subject played the computer game from 11:30 to 12:30 on December 26 (Thursday), 2019. A ninth subject played the computer game from 13:30 to 14:30 on December 26 (Thursday), 2019. A tenth subject played the computer game from 14:30 to 15:30 on December 26 (Thursday), 2019.

Note that in the first experiment, when the first subject, the third subject, the fifth subject, the seventh subject, and the ninth subject played the computer game, ions were delivered to the space R. Alternatively, ions may be delivered toward the subjects in the first experiment, when the first subject, the third subject, the fifth subject, the seventh subject, and the ninth subject play the computer game. Note that when the second subject, the fourth subject, the sixth subject, the eighth subject, and the tenth subject played the computer game, no ions were delivered.

As shown in FIG. 8, the second experiment schedule includes 10 experiment schedulings. In the second experiment, ten subjects played the computer game.

For example, a first subject played a computer game from 10:30 to 11:30 on January 24 (Friday), 2020. A second subject played the computer game from 11:30 to 12:30 on January 24 (Friday), 2020. A third subject played the computer game from 13:30 to 14:30 on January 24 (Friday), 2020. A fourth subject played the computer game from 14:30 to 15:30 on January 24 (Friday), 2020. A fifth subject played the computer game from 15:30 to 16:30 on January 24 (Friday), 2020. A sixth subject played the computer game from 10:30 to 11:30 on January 31 (Friday), 2020. A seventh subject played the computer game from 11:30 to 12:30 on January 31 (Friday), 2020. An eighth subject played the computer game from 13:30 to 14:30 on January 31 (Friday), 2020. A ninth subject played the computer game from 14:30 to 15:30 on January 31 (Friday), 2020. A tenth subject played the computer game from 15:30 to 16:30 on January 31 (Friday), 2020.

Note that in the second experiment, when the second subject, the fourth subject, the sixth subject, the eighth subject, and the tenth subject played the computer game, ions were delivered to the space R. Alternatively, ions may be delivered toward the subjects in the second experiment, when the second subject, the fourth subject, the sixth subject, the eighth subject, and the tenth subject play the computer game. Note that when the first subject, the third subject, the fifth subject, the seventh subject, and the ninth subject played the computer game, no ions were delivered.

In addition, the second experiment was conducted at an interval of a period of about one month from the first experiment so that the subjects were not accustomed to the game for conducting the experiment.

The experimental procedure in the example includes a first process to a seventh process.

The first process refers to a process in which a subject wears an electroencephalograph. A simple electroencephalograph is used as the electroencephalograph. The electrodes of the electroencephalograph are attached to the ear and the forehead of the subject. The electroencephalograph acquires α waves and β waves every second. An electroencephalogram acquired from the simple electroencephalograph is converted to a value indicating a psychological state of the user H by using Sports KANSEI (available from Littlesoftware Inc.).

The second process refers to a process in which the subject plays and practices a computer game. In the second process, the subject plays and practices the computer game with the entertainment device 100 disposed on the desk DS. Note that the entertainment device 100 disposed on the desk DS does not include the ion delivery device 40. Specifically, in the second process, the subject plays and practices Mario Kart 8 Deluxe (Nintendo Co., Ltd.) using a Nintendo Switch (Nintendo Co., Ltd.). Mario Kart 8 Deluxe is a racing game. A racing game is a game in which a player and a player or a computer operate vehicles to race. The player is the subject. In one experiment, the subject played a time trial in Mario Kart 8 Deluxe twice.

The third process refers to a process in which the subject answers a questionnaire. The questionnaire of the third process is filled in on the desk DS illustrated in FIG. 7. As the questionnaire, a two-dimensional mood scale-short term (TDMS-ST) questionnaire was used. The two-dimensional mood scale-short term (TDMS-ST) questionnaire can measure changes in the subjective mood (psychological state) of the user H.

The fourth process refers to a process in which the subject moves to the first tent or the second tent. The ion delivery device 40 was disposed in the space R1 of the first tent. In the first tent of the fourth process, ions are delivered to the space R1, and ions can be delivered to the user H. In a case where the space R1 of the first tent was filled with ions, the ion concentration was 100000 or more per 1 cm³. The same applies to the space R of the second tent. The subject does not know that in the first tent and the second tent, wind containing ions is delivered from the ion delivery device 40. In addition, the subject does not know that in the first tent and the second tent, wind containing no ions is delivered from the ion delivery device 40.

The fifth process refers to a process in which the subject plays the computer game. In the fifth process, as illustrated in FIG. 1, the subject plays the computer game with the entertainment device 100. Specifically, in the fifth process, the subject plays Mario Kart 8 Deluxe (Nintendo Co., Ltd.) using a Nintendo Switch (Nintendo Co., Ltd.). In one experiment, the subject plays a time trial in Mario Kart 8 Deluxe three times.

The sixth process refers to a process in which the subject answers a questionnaire. As the questionnaire of the sixth process, the two-dimensional mood scale-short term (TDMS-ST) questionnaire was used. The subject answers the questionnaire regarding the mood (psychological state) of the user H based on the questionnaire result answered in the third process. That is, the two-dimensional mood scale-short term (TDMS-ST) questionnaire measures a change in mood before playing the computer game and after playing the computer game.

The seventh process refers to a process in which the subject removes the electroencephalograph.

### Example and Comparative Example

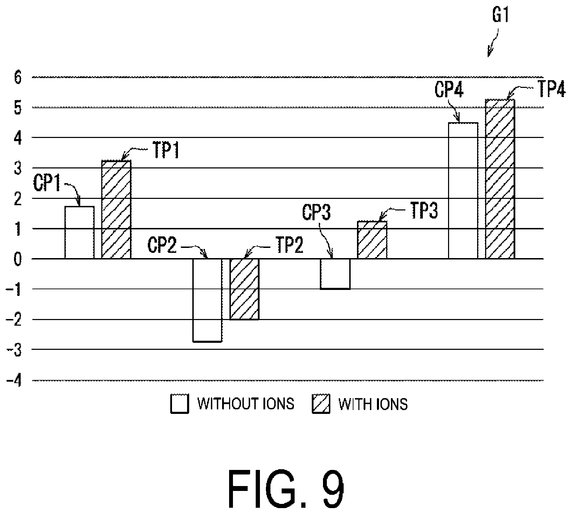

With reference to FIGS. 9 to 11, an example and a comparative example of the present invention will be described. The example shows experiment results in the space R in which the ion delivery device 40 delivers ions. The comparative example shows experiment results in the space R in which the ion delivery device 40 does not deliver ions.

FIG. 9 is a graph showing the example and the comparative example of the present invention. FIG. 9 shows a graph G1. The graph G1 includes the example and the comparative example. The example includes an experiment result TP1, an experiment result TP2, an experiment result TP3, and an experiment result TP4. The comparative example includes an experiment result CP 1, an experiment result CP2, an experiment result CP3, and an experiment result CP4.

The experiment result TP1 shows an average value of the amount of change in an activity level calculated based on the questionnaire results of the ten subjects who played the computer game in the space R in which the ion delivery device 40 delivered ions. The experiment result CP1 shows an average value of the amount of change in the activity level calculated based on the questionnaire results of the ten subjects who played the computer game in the space R in which the ion delivery device 40 did not deliver ions.

The experiment result TP1 and the experiment result CP1 shown in FIG. 9 each indicate the average value of the amount of change in the activity level measured by performing the two-dimensional mood scale-short term (TDMS-ST) questionnaire. The activity level is an indicator indicating how much energy the user H feels. Specifically, the activity level indicates a standard for the psychological state with a positive feeling of exhilaration and a negative feeling of heaviness on either end. For example, when the numerical value indicating the activity level is high, the user H is in a state in which he/she has lots of energy. When the numerical value indicating the activity level is low, the user H is a state in which he/she feels lethargic and is without energy.

As shown in FIG. 9, the experiment result TP1 of the example was a result significantly larger than the experiment result CP1 of the comparative example. Specifically, the average value of the amount of change in the activity level of the example shown in FIG. 9 was "about 3." On the other hand, the average value of the amount of change in the activity level of the comparative example was "about 2." As shown in FIG. 9, the amount of change in the activity level of the example is larger than the amount of change in the activity level of the comparative example. A larger amount of change in the activity level indicates that the user H is playing the computer game in an energetic state. That is, it is possible to infer that the user H of the example played the computer game in a state in which he/she has lots of energy, as compared to the user H of the comparative example. Thus, a larger amount of change in the activity level indicates a psychological state suited to play the computer game. Accordingly, it is possible to infer that the user H that played the computer game under the conditions of the example played the computer game with a psychological state more suited to play the computer game than the user H that played the computer game under the conditions of the comparative example.

Next, with reference to FIG. 9, the example and the comparative example of the present invention will be described. As shown in FIG. 9, the graph G1 shows the experiment result TP2 and the experiment result CP2. The experiment result TP2 shows an average value of the amount of change in a stability level calculated based on the questionnaire results of the ten subjects who played the computer game in the space R in which the ion delivery device 40 delivered ions. The experiment result CP2 shows an average value of the amount of change in the stability level calculated based on the questionnaire results of the ten subjects who played the computer game in the space R in which the ion delivery device 40 did not deliver ions.

The experiment result TP2 and the experiment result CP2 shown in FIG. 9 each indicate the average value of the amount of change in the stability level measured by performing the two-dimensional mood scale-short term (TDMS-ST) questionnaire. The stability level is an indicator indicating how stable the user H is feeling. Specifically, the stability level indicates a standard for the psychological state with a positive feeling of calmness and a negative feeling of agitation on either end. For example, when the numerical value indicating the stability level is high, the user H is in a state in which he/she is relaxed and feels calm. On the other hand, when the numerical value indicating the stability level is low, the user H is in a state in which he/she is irritated and feels nervous.

As shown in FIG. 9, the experiment result TP2 of the example was a result significantly smaller than the experiment result CP2 of the comparative example. Specifically, the average value of the amount of change in the stability level of the example shown in FIG. 9 was "about -2." On the other hand, the average value of the amount of change in the stability level of the comparative example was "about -3." In a case where the stability level changes in the negative direction, the smaller the amount of change in the negative direction is, the smaller the degree of nervousness is. That is, it is possible to infer that the user H of the example played the computer game in a state in which the degree of nervousness is smaller than that of the user H of the comparative example. Accordingly, it is possible to infer that the user H that played the computer game under the conditions of the example played the computer game with a psychological state more suited to play the computer game than the user H that played the computer game under the conditions of the comparative example.

Next, with reference to FIG. 9, the example and the comparative example of the present invention will be described. As shown in FIG. 9, the graph G1 shows the experiment result TP3 and the experiment result CP3. The experiment result TP3 shows an average value of the amount of change in a comfort level calculated based on the questionnaire results of the ten subjects who played the computer game in the space R in which the ion delivery device 40 delivered ions. The experiment result CP3 shows an average value of the amount of change in the comfort level calculated based on the questionnaire results of the ten subjects who played the computer game in the space R in which the ion delivery device 40 delivered ions.

The experiment result TP3 and the experiment result CP3 shown in FIG. 9 each indicate the average value of the amount of change in the comfort level measured by performing the two-dimensional mood scale-short term (TDMS-ST) questionnaire. The comfort level is an indicator indicating how comfortable the user H is feeling. Specifically, the comfort level indicates a standard for the psychological state with a positive feeling and a negative feeling on either end. For example, when the numerical value indicating the comfort level is high, the user H is in a state in which he/she feels comfortable and is positive. On the other hand, when the numerical value indicating the comfort level is low, the user H is in a state in which he/she is negative.

As shown in FIG. 9, the experiment result TP3 of the example was a result significantly larger than the experiment result CP3 of the comparative example. Specifically, the average value of the amount of change in the comfort level of the example shown in FIG. 9 was "about 1." On the other hand, the average value of the amount of change in the comfort level of the comparative example was "about -1." The user H of the example in which the comfort level is changed to the positive side is playing the computer game in a state of being positive and feeling comfortable, as compared to the user H of the comparative example in which the comfort level is changed to the negative side. Accordingly, it is possible to infer that the user H that played the computer game under the conditions of the example played the computer game with a psychological state more suited to play the computer game than the user H that played the computer game under the conditions of the comparative example.

Further, with reference to FIG. 9, the example and the comparative example of the present invention will be described. As shown in FIG. 9, the graph G1 shows the experiment result TP4 and the experiment result CP4. The experiment result TP3 shows an average value of the amount of change in an arousal level calculated based on the questionnaire results of the ten subjects who played the computer game in the space R in which the ion delivery device 40 delivered ions. The experiment result CP4 shows an average value of the amount of change in the arousal level calculated based on the questionnaire results of the ten subjects who played the computer game in the space R in which the ion delivery device 40 did not deliver ions.

The experiment result TP4 and the experiment result CP4 shown in FIG. 9 each indicate the average value of the amount of change in the arousal level measured by performing the two-dimensional mood scale-short term (TDMS-ST) questionnaire. The arousal level is an indicator indicating the degree of arousal of the user H. Specifically, the arousal level indicates a standard for the psychological state with excitement and calmness on either end. For example, in a case where the numerical value indicating the arousal level is high, the user H is in a state in which he/she is excited and feels active. On the other hand, for example, in a case where the numerical value indicating the arousal level is low, the user H is in a state in which he/she is sleepy and feels inactive.

As shown in FIG. 9, the experiment result TP4 of the example was a result significantly higher than the experiment result CP4 of the comparative example. Specifically, the average value of the amount of change in the arousal level of the example shown in FIG. 9 was "about 5." On the other hand, the average value of the amount of change in the arousal level of Comparative Example 1 was "about 4." As shown in FIG. 9, the amount of change in the arousal level of the example is larger than the amount of change in the arousal level of Comparative Example 1. A larger amount of change in the arousal level indicates that the user H is playing the computer game in an aroused state. Further, a larger amount of change in the arousal level indicates that the user H has a psychological state suited to play the computer game. That is, it is possible to infer that the user H of the example played the computer game, for example, in a psychological state of being excited and invigorated, as compared to the user H of the comparative example. Accordingly, it is possible to infer that the user H that played the computer game under the conditions of the example played the computer game with a psychological state more suited to play the computer game than the user H that played the computer game under the conditions of the comparative example.

As described in the example, with regard to the activity level, the stability level, the comfort level, and the arousal level, the experiment results TP1 to TP4 in a case where the computer game was played using the ion delivery device 40 are significantly larger in terms of the average values of the amount of change measured by the two-dimensional mood scale-short term (TDMS-ST) questionnaire than the experiment results CP1 to CP4 in a case where the computer game was played without using the ion delivery device 40. That is, it is possible to infer that the psychological state of the user H can be more changed to a psychological state suited to play the computer game by delivering ions by the ion delivery device 40.

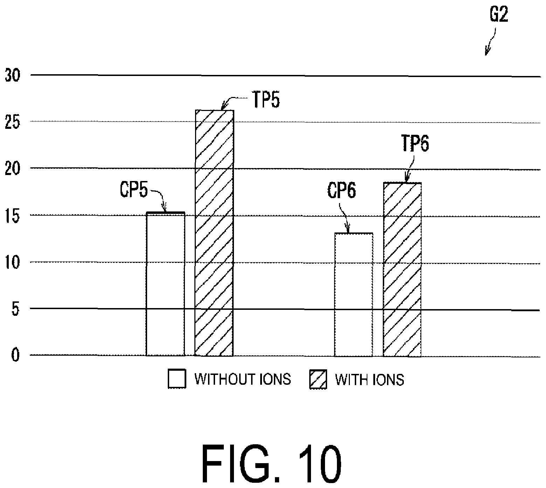

Next, with reference to FIG. 10, the example and the comparative example of the present invention will be described. FIG. 10 is a graph showing the example and the comparative example of the present invention. FIG. 10 includes a graph showing an average value of the amount of change in a concentration level in the example and the comparative example, and a graph showing an average value of the amount of change in a zone in the example and the comparative example. FIG. 10 shows a graph G2. The graph G2 includes the example and the comparative example. The example includes an experiment result TP5 and an experiment result TP6. The comparative example includes an experiment result CP5 and an experiment result CP6.

The experiment result TP5 shows an average value of the amount of change in a first concentration level calculated based on brain waves acquired from the ten subjects who played the computer game in the space R in which the ion delivery device 40 delivered ions. The experiment result CP5 shows an average value of the amount of change in the first concentration level calculated based on brain waves acquired from the ten subjects who played the computer game in the space R in which the ion delivery device 40 did not deliver ions.

FIG. 10 shows the first concentration level obtained by measuring the brain waves of the subjects using an electroencephalograph. The first concentration level is output by using sports KANSEI (available from Littlesoftware Inc.) based on the value output from the electroencephalograph. The first concentration level is a value calculated from frequency analysis of the brain waves. The first concentration level is an indicator indicating the degree of concentration of the user H playing the computer game.

As shown in FIG. 10, the experiment result TP5 of the example tended to be higher than the experiment result CP5 of the comparative example. Specifically, the amount of change in the first concentration level of the example shown in FIG. 10 was "about 25." On the other hand, the average value of the amount of change in the first concentration level of the comparative example was "about 15." As shown in FIG. 10, the amount of change in the first concentration level of the example is larger than the amount of change in the first concentration level of the comparative example. A larger amount of change in the first concentration level indicates that the user H is playing the computer game in a concentrated state. Accordingly, it is possible to infer that the user H that played the computer game under the conditions of the example played the computer game with a psychological state more suited to play the computer game than the user H that played the computer game under the conditions of the comparative example.

As described with reference to FIG. 10, with regard to the first concentration level, the experiment result TP5 in a case where the computer game was played using the ion delivery device 40 tended to be large in terms of the amount of change in the psychological state obtained by measuring brain waves, as compared to the experiment result CP5 in a case where the computer game was played without using the ion delivery device 40. That is, it is possible to infer that evaluation on the operation of the computer game can be improved when the computer game is played while ions are delivered by the ion delivery device 40.

The experiment result TP6 shows an average value of the amount of change in a second concentration level calculated based on the brain waves acquired from the ten subjects who played the computer game in the space R in which the ion delivery device 40 delivered ions. The experiment result CP6 shows an average value of the amount of change in the second concentration level calculated based on the brain waves acquired from the ten subjects who played the computer game in the space R in which the ion delivery device 40 did not deliver ions.

FIG. 10 shows the second concentration level obtained by measuring the brain waves of the subjects using an electroencephalograph. The second concentration level is output by using sports KANSEI (available from Littlesoftware Inc.) based on the value output from the electroencephalograph. The second concentration level is a value calculated from frequency analysis of the brain waves. The second concentration level is calculated based on a sensory motor rhythm (SMR) wave. An SMR wave is a type of β wave output when relaxation (α waves) and concentration (β waves) are balanced. A period of time during which the SMR wave is output is, what is called, a zone. The zone is an arousal standard at which the user H playing the computer game can exert the best ability.

As shown in FIG. 10, the experiment result TP6 of the example tended to be higher than the experiment result CP6 of the comparative example. Specifically, the amount of change in the second concentration level of the example shown in FIG. 10 was "about 20." On the other hand, the average value of the amount of change in the second concentration level of the comparative example was "about 15." As shown in FIG. 10, the amount of change in the second concentration level of the example is larger than the amount of change in the second concentration level of the comparative example. A larger amount of change in the second concentration level indicates that the user H is playing the computer game in a concentrated state. Accordingly, it is possible to infer that the user H that played the computer game under the conditions of the example played the computer game with a psychological state more suited to play the computer game than the user H that played the computer game under the conditions of the comparative example.

As described with reference to FIG. 10, with regard to the second concentration level, the experiment result TP6 in a case where the computer game was played using the ion delivery device 40 tended to be large in terms of the amount of change in the psychological state obtained by measuring brain waves, as compared to the experiment result CP6 in a case where the computer game was played without using the ion delivery device 40. That is, it is possible to infer that evaluation on the operation of the computer game can be improved when the computer game is played while ions are delivered by the ion delivery device 40.

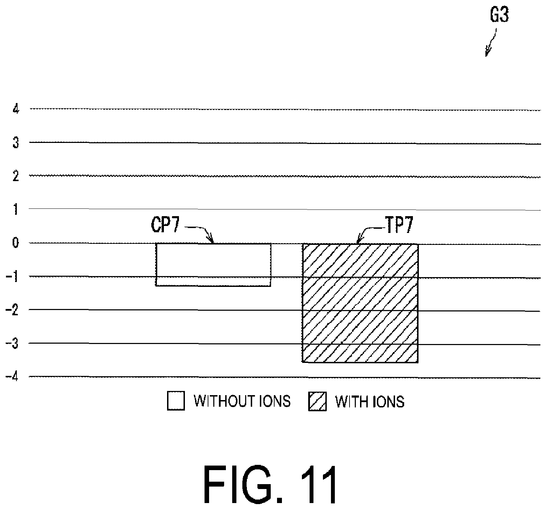

FIG. 11 is a graph showing the example and the comparative example of the present invention. FIG. 11 shows a graph G3. The graph G3 includes the example and the comparative example. The example includes an experiment result TP7. The comparative example includes an experiment result CP7. In the example and the comparative example shown in the graph G3, experiments were conducted using a time trial in Mario Kart 8 Deluxe. Specifically, each of the ten subjects performed the time trial five times. Two of the time trials were practices. Three of the time trials were trials. In the example and the comparative example, an average of the two practices was compared with an average of the three trials.

More specifically, the experiment result TP7 indicates the amount of change (seconds) in the time trial of the ten subjects who played Mario Kart 8 Deluxe in the space R in which the ion delivery device 40 delivered ions. The experiment result CP1 indicates the amount of change (seconds) in the time trial of the ten subjects who played Mario Kart 8 Deluxe in the space R in which the ion delivery device 40 did not deliver ions.

As shown in FIG. 11, the experiment result TP7 of Example 1 is larger in terms of the amount of change (seconds) than the experiment result CT7 of the comparative example. Specifically, the average value of the amount of change (seconds) of the example shown in FIG. 11 was "about -3 (seconds)." On the other hand, the average value of the amount of change (seconds) of the comparative example was "about -1 (seconds)." As shown in FIG. 11, the average value of the amount of change (seconds) of the example is larger than the average value of the amount of change (seconds) of the comparative example. A larger amount of change (seconds) indicates that evaluation on the operation of the computer game is improved. In the time trial, shorter time indicates that the evaluation on the operation of the computer game is improved. Specifically, in the time trial of Mario Kart 8 Deluxe, when a period of time from the start to the goal is shorter, the evaluation on the operation of the computer game is improved. That is, when the amount of change in the negative direction increases, the period of time from the start to the goal is shortened. Thus, it is possible to infer that in the user H of the example, the evaluation on the operation of the computer game was improved, as compared with the user H of the comparative example. Accordingly, it is possible to infer that in the user H who performed the time trial under the conditions of Example 1, the evaluation on the operation of the computer game was improved more than the user H who performed the time trial under the conditions of the comparative example.

That is, it is possible to infer, from the experiment result TP7, that the evaluation on the operation of the computer game of the user H can be improved by playing the computer game while ions are delivered by the ion delivery device 40.

The embodiments of the present invention have been described above with reference to the accompanying drawings. However, the present invention is not limited to the embodiments described above, and the present invention can be implemented in various modes without departing from the gist thereof. Further, various inventions can be formed by appropriately combining a plurality of components disclosed in the embodiments described above. For example, some components may be removed from all of the components described in the embodiments. Furthermore, the components across different embodiments may be appropriately combined. For ease of understanding, the drawings schematically illustrate each component as a main constituent, and the thickness, length, number, spacing, and the like of each component illustrated are different from the actual thickness, length, number, and spacing for convenience of drawing preparation. Further, the speed, material, shape, dimensions, and the like of each component illustrated in the embodiments described above are one example and are not particularly limited, and various modifications can be made within a range that does not substantially deviate from the configuration of the present invention.
(1) Although the ion delivery devices 40 according to the first to fourth embodiments are attached to the output device AV, no such limitation is intended. For example, the ion delivery device 40 may be installed on the desk DS. The ion delivery device 40 may be, for example, an air purifier with an ion generation function. The ion delivery device 40 may be, for example, an air conditioner with an ion generation function or other air conditioning apparatuses with an ion generation function. The ion delivery device 40 may be, for example, an electric fan with an ion generation function. That is, the ion delivery device 40 needs only to be disposed in the space R.
   The ion delivery device 40 may be, for example, a headset with an ion generation function. The headset includes a speaker and a microphone. In a case where the headset includes the ion delivery device 40, the ion generation unit 41 and the air sending unit 42 deliver ions to the face of the user H. The ion generation unit 41 and the air sending unit 42 are disposed, for example, near the microphone.
(2) The delivery control units 151 according to the first to fourth embodiments each may change the amount of ions delivered in accordance with a playtime of the computer game. The playtime indicates a period of time during which the gaming device 10 has progressed the game. The delivery control unit 151 changes the amount of ions delivered based on the playtime. Specifically, for example, the delivery control unit 151 controls the air sending unit 42 so as to change the airflow. The amount of ions delivered is changed by changing the airflow coming from the air sending unit 42. Specifically, the air sending unit 42 increases the airflow as the playtime increases. Thus, the airflow coming from the air sending unit 42 can be changed in accordance with the playtime. As a result, the airflow can be increased so that the amount of ions delivered can be increased in tune with the mental state of the user H, which changes in accordance with the playtime.
   Note that the air sending unit 42 blows air and at the same time, the ion generation unit 41 emits ions. Thus, ions are contained in the wind generated by the air sending unit 42. That is, in response to increasing the airflow, the amount of ions delivered can also be increased. As a result, in a case where the playtime increases, more wind containing ions can be delivered to the user H.
(3) The delivery control units 151 according to the first to fourth embodiments may each always deliver ions. Then, the delivery control unit 151 may deliver ions based on a change in the state of the user H, an image, and/or a sound. That is, in addition to ions that are always delivered, the delivery control unit 151 may deliver ions based on a change in the state of the user H, an image, and/or a sound.
(4) The delivery control units 151 according to the second embodiment and the fourth embodiment deliver ions to the user H, but no such limitation is intended. For example, the user H may include a player who plays a game and a person who watches the game.

### Industrial Applicability

The present invention provides an entertainment method and an entertainment device, and the provided entertainment method and entertainment device have industrial applicability.

### Reference Signs List

10 Gaming device
15 Control unit
40 Ion delivery device
50 Controller
60 Detection unit
100 Entertainment device
150 Control unit
151 Delivery control unit
AV Output device
H User (person)
R Space
S102 Step (outputting step)
S103 Step (detecting step)
S104 Step (delivering step)
5202 Step (outputting step)
5203 Step (detecting step)
5204 Step (delivering step)
5302 Step (outputting step)
5303 Step (detecting step)
5304 Step (delivering step)
S402 Step (outputting step)
S403 Step (detecting step)
S404 Step (delivering step)

## Claims

1. An entertainment method comprising:
outputting an image related to entertainment and/or a sound related to entertainment; and
delivering ions in such a manner that an ion concentration in a space in which a person is present increases, based on the image and/or the sound.

2. An entertainment method comprising:
outputting an image related to entertainment and/or a sound related to entertainment; and
delivering ions toward a person based on the image and/or the sound.

3. The entertainment method according to claim 1 or 2, further comprising:
detecting a change in a state of the person,
wherein, in the delivering, the ions are delivered based on the change in the state of the person, the image, and/or the sound.

4. The entertainment method according to claim 3,
wherein, in the delivering, the ions are delivered based on the change in the state of the person after the image is output and/or the change in the state of the person after the sound is output.

5. An entertainment method comprising:
outputting an image related to entertainment and/or a sound related to entertainment;
detecting a change in a state of the person; and
delivering ions in such a manner that an ion concentration in a space in which the person is present increases, based on a detection result indicating the change in the state of the person.

6. An entertainment method comprising:
outputting an image related to entertainment and/or a sound related to entertainment;
detecting a change in a state of the person; and
delivering ions toward the person based on a detection result indicating the change in the state of the person.

7. The entertainment method according to any one of claims 1 to 6,
wherein, in the outputting, the image and/or the sound is output by receiving an operation signal from the person via a controller and progressing a computer game.

8. The entertainment method according to claim 7,
wherein, in the outputting, the image corresponding to a progress status of the computer game and/or the sound corresponding to the progress status of the computer game is output, and
in the delivering, an amount of the ions delivered is controlled in accordance with the progress status.

9. The entertainment method according to any one of claims 3 to 8,
wherein the change in the state of the person includes a change in a face of the person and/or a change in a motion of the person, and
the change in the face of the person includes a facial expression of the person and/or a surface temperature of the face of the person.

10. An entertainment device comprising:
an output device configured to output an image related to entertainment and/or a sound related to entertainment;
an ion delivery device configured to deliver ions; and
a delivery control unit configured to control the ion delivery device based on the image or the sound.

11. An entertainment device comprising:
an output device configured to output an image related to entertainment and/or a sound related to entertainment;
an ion delivery device configured to deliver ions;
a detection unit configured to detect a change in a state of the person; and
a delivery control unit configured to control the ion delivery device based on the change in the state of the person.
